# EUROPEAN PATENT SPECIFICATION

(11) **EP 0 754 365 B1**
(45) Date of publication and mention of the grant of the patent: **25.02.1998**
(21) Application number: 95905411.5
(22) Date of filing: 14.12.1994
(51) Int. Cl.: H02K 16/00, H02K 3/47, H02K 1/27

(54) **REDUNDANT ELECTRIC MOTOR ARRANGEMENT INCLUDING SINGLE ROTOR ASSEMBLY HAVING TWO MAGNET SECTIONS**
REDUNDANTE ELEKTROMOTORANORDNUNG MIT EINEM ZWEI MAGNET- TEILE AUFWEISENDEN ROTOR
CONFIGURATION REDONDANTE DE MOTEUR ELECTRIQUE COMPORTANT UN ROTOR UNIQUE A DEUX SECTIONS AIMANTEES

(30) Priority: 15.12.1993 US 167375; 03.06.1994 US 253533
(43) Date of publication of application: 22.01.1997
(73) Proprietor: AlliedSignal Inc., Morristown, New Jersey 07962-2245 (US)
(72) Inventor: DENK, Joseph, Manhattan Beach, CA 90266 (US)
(74) Representative: Poidatz, Emmanuel
(86) International application number: US9414524
(87) International publication number: WO9517035

(56) References cited:
- FR-A- 1 555 855
- FR-A- 2 618 616
- PATENT ABSTRACTS OF JAPAN, vol. 10, no. 279 (E-439) (2335), 20 September 1986 & JP-A-61 098 147 (CANON INC), 16 May 1986

## Description

### BACKGROUND OF THE INVENTION

This invention relates to high speed redundant electrical machines used, for example, for driving aircraft vapor cycle compressors. More particularly, this invention relates to an electrical machine for the purpose described which includes a single rotor having two separate identical permanent magnet sections operating in conjunction with two separate identical toroidally wound two pole stator sections.

These machines desirably have minimum weight and size, electromagnetic and physical isolation of the two rotor sections, high reactance, low short-circuit current capability for fault tolerance and current wave shape filtering, high reliability and efficiency, and low cost. It will be appreciated that machines of the type described solve a particular drive motor redundancy problem. A non-redundant drive motor having only a single motor section and the same power (HP) and speed (RPM) rating would be simpler in construction and of lower cost and weight, as will be readily understood.

Minimum weight and size requirements are compatible with high reactance, low fault current characteristics. The flux utilization factor for a torbidally wound motor versus the conventional type motor inherently results in higher motor reactance (for the same motor flux, approximately twice the number of turns are required for the same voltage). In case of an internal or external fault, the low internal winding losses due to the low fault current can be removed and dissipated by the motor cooling system. Additionally, the high reactance acts as a filter for the motor input current, therefore benefitting overall system weight and size.

High reliability and low cost are achieved simultaneously with simplicity in design and a low parts count, as is high efficiency.

The present applicant is aware of the following U.S. patents which relate generally to electric motors of the type described: U.S. Patent 4,625,135 (U.S. Class 310/156) which issued on November 25, 1986 to Kasabian; U.S. patent 4,617,726 (U.S. Class 29/598) which issued on October 21, 1986 to Denk; U.S. Patent 4,667,123 (U.S. Class 310/156) which issued on May 19, 1987 to Denk, et al; U.S. Patent 4,709,180 (U.S. Class 310/179) which issued on November 24, 1987 to Denk; U.S. Patent 4,741,094 (U.S. Class 29/598) which issued on May 3, 1988 to Denk, et al; U.S. Patent 4,852,245 (U.S. Class 29/596) which issued on August 1, 1989 to Denk; U.S. Patent 4,987,674 (U.S. Class 29/596) which issued on January 29, 1991 to Denk; U.S. Patent 5,030,877 (U.S. Class 290/52) which issued on July 9, 1991 to Denk; and U.S. Patent 5,233,252 (U.S. Class 310/254) which issued on August 3, 1993 to Denk. The multi-section rotor shown in Figure 7 of U.S. Patent 4,625,135 features a ferro-magnetic through shaft that provides a return path for four, six and twelve pole sections.

This shaft also provides the longitudinal stiffness needed for high speed operation. However, none of the aforementioned patents addresses the redundant feature of the present invention. In this regard, it is noted that the present invention improves on the prior art patents that particularly relate to two pole toothless permanent magnet rotor machines.

Accordingly, it is the object of this invention to provide a drive motor of the type described having two identical motor sections and featuring a single rotor assembly having two coaxial cylindrical permanent magnet rotor sections and two stator assemblies corresponding to the permanent magnet sections. Each of the motor sections can be powered from a different electrical bus to achieve redundancy and maximum system reliability.

### SUMMARY OF THE INVENTION

This invention contemplates an electrical drive motor arrangement having a rotor assembly and a stator assembly. The rotor assembly includes a pair of identical coaxial cylindrical two pole permanent magnet sections, a pair of non-magnetic stub shafts, a non-magnetic magnet separator and a non-magnetic retaining hoop. The retaining hoop has sufficient diametral interference with the permanent magnet sections, the stub shafts and the separator to insure that the sections are held together with the respective stub shafts and non-magnetic magnet separator in compression over desired operating speed and temperature conditions.

The stator assembly includes a pair of stators, one for each of the permanent magnet sections. The magnet sections and the respective stator assemblies are arranged in tandem to achieve desired redundancy.

Typically, for a three phase motor, each stator assembly has six individually toroidally-wound sixty degree half-phase sectors. It will be appreciated that the use of toroidally wound stators for high speed redundant motors will result in minimum end turn extension length. This allows the rotor sections to be used for high speed applications without excessive rotor length, and eliminates shaft critical speed problems.

### BRIEF DESCRIPTION OF THE DRAWINGS

Figure 1 is a partially sectioned diagrammatic elevational view illustrating the invention.

Figure 2 is a diametral cross-sectional representation of a stator assembly according to the invention.

Figure 3 is an enlarged portion of Figure 2 particularly illustrating the structural details of the stator assembly.

Figure 4 is a partial longitudinal sectional representation of the stator assembly.

### DETAILED DESCRIPTION OF THE INVENTION

With reference to the several Figures in the drawing, wherein corresponding components carry corresponding numerical designations, a drive motor is designated by the numeral 1. Motor 1 is of the two-pole, three-phase, toothless toroidal winding type. Only as much of motor 1 as is necessary to understand the invention will be herein illustrated and described.

Motor 1 includes a rotor assembly including a pair of coaxial cylindrical two-pole permanent magnet sections designated by the numerals 2 and 4. Magnet sections 2 and 4 are surrounded by a pair of non-magnetic stub shafts 8 and 10, respectively, and supported by a non-magnetic retaining hoop 6. A non-magnetic separator 12 separates magnet sections 2 and 4. Non-magnetic retaining hoop 6 has sufficient diametral interference with the assembly including magnet sections 2 and 4, stub shafts 8 and 10 and separator 12 to insure that the assembly is compressively retained over the operating speed and temperature range of motor 1.

A bore seal tube 7 is part of an assembly along with a retainer 14 which retains a pair of stator assemblies 16 and 18 in operative relation with magnet sections 2 and 4, respectively. Each of the stator assemblies 16 and 18 has a laminated flux collector ring such as 20 which is surrounded by insulation such as 21 and the toroidal windings. A winding barrier 22 having a plurality of through holes for cooling flow separates the respective stator assemblies 16 and 18. With the arrangement described magnet sections 2 and 4 and respective stator assemblies 16 and 18 are arranged in tandem, as will now be discerned.

The windings such as 24 of stators 16 and 18 are of Litz cable (fine stranded, fully transposed conductors) which controls eddy current losses, eliminate circulating current losses in the copper strands of the windings, and provides a large effective surface area for cooling as is desireable.

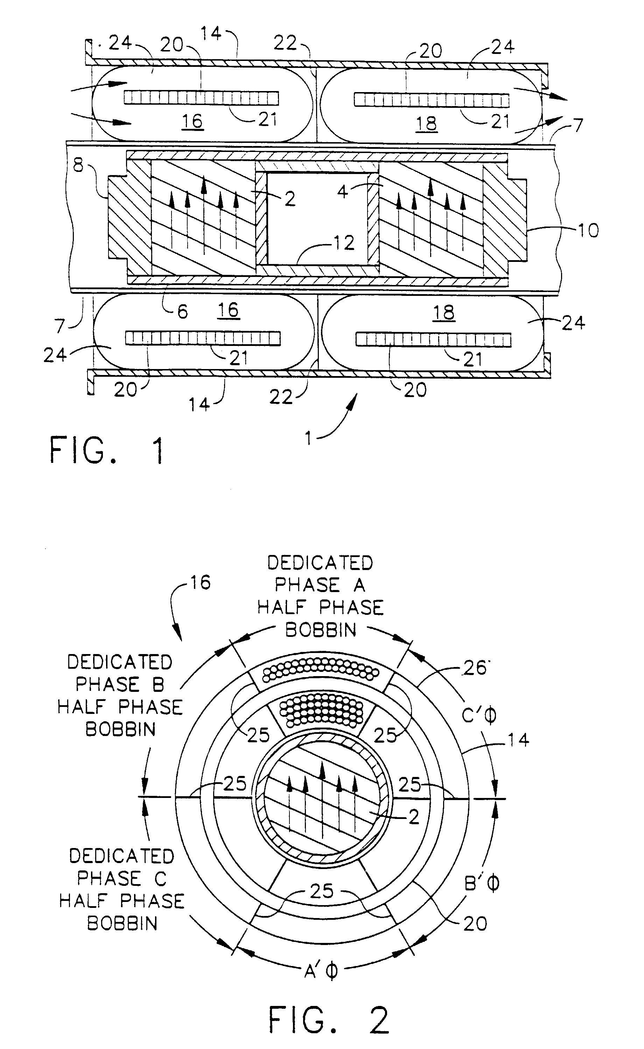

As particularly illustrated in Figure 2, each of the stator assemblies 16 and 18 (stator assembly 16 shown for illustration purposes) includes six individually toroidal-wound unvarnished or fully encapsulated sixty degree half-phase sectors, i.e. dedicated phase sectors A, B and C half phase coils and half phases A', B' and C'. Adjacent phases are separated by phase-to-phase insulators/separators designated by the numeral 25. Retainer 14 surrounds the windings of the stator assemblies.

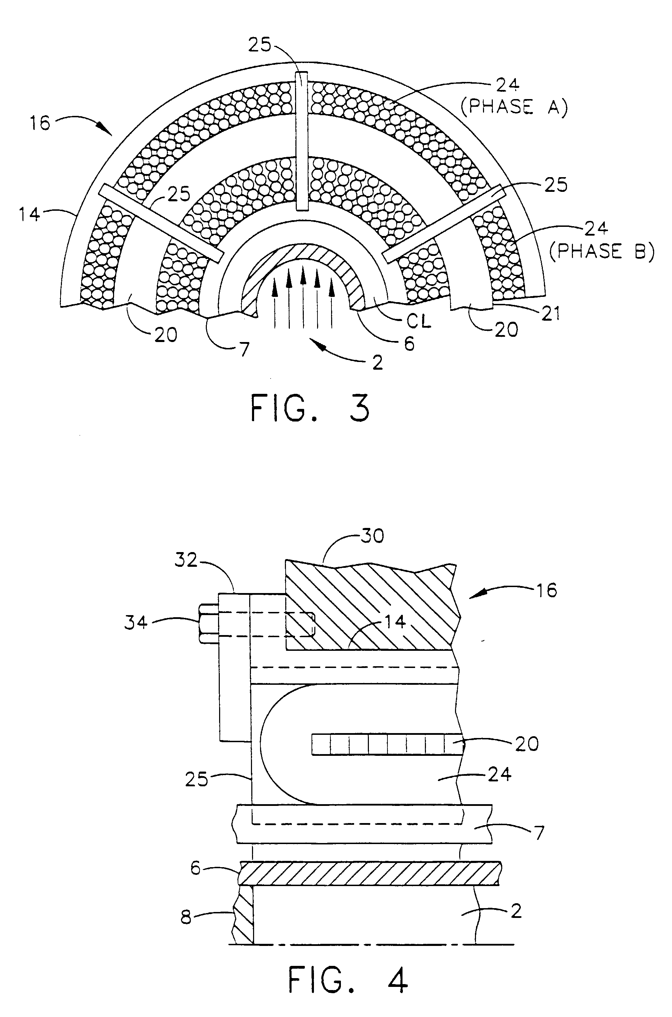

With particular reference to Figure 3, insulator/separators 25 are keyed into retainer 14 and bore seal tube 7, and a rotating clearance CL is provided between the rotor and stator assemblies.

With particular reference to Figure 4, a motor housing is designated by the numeral 30. A stator retaining ring 32 is secured to frame 14 and housing 30 via a fastening means such as a screw or the like 34.

Flow-through cooling on the outer surfaces of fully encapsulated windings is as indicated by the arrows in Figure 1. For unvarnished windings coolant flows through the Litz conductors in addition to said outer surfaces.

It will be appreciated that conventional stator windings using slotted configurations have two coil sides per slot of different phase windings. Full phase-to-phase voltage potential exists between these coil sides as well as between phase windings, which cross over each other in the end turns, thus limiting stator robustness and reducing viability. The configuration of the present invention as shown and described avoids this disadvantage as will now be discerned.

It will be understood that individual toroidal wound dedicated half-phase sector segments, as particularly shown in Figure 2, provide the best achievable winding protection against phase-to-phase and winding ground shorts. Winding reliability and fault tolerance are accordingly much higher than achieved by other stator configurations.

There has thus been described a motor arrangement which satisfies the aforementioned object of the invention by featuring a single rotor assembly including a pair of coaxial permanent magnet rotor sections. The permanent magnet rotor sections and two corresponding stator assemblies are tandem mounted. A protective winding barrier is installed between the two stator assemblies and a non-magnetic separator separates the magnet sections.

With the above description of the invention in mind, reference is made to the claims appended hereto for a definition of the scope of the invention.

## Claims

1. A redundant electric motor arrangement, comprising:
a bore seal tube (7);
a single rotor assembly including a pair of identical coaxial cylindrical two pole permanent magnet sections (2,4) disposed within the bore seal tube;
a non-magnetic retaining hoop (6) disposed within the bore seal tube;
a pair of non-magnetic stub shafts (8,10) disposed within the bore seal tube and supported by the non-magnetic retaining hoop (6), each of said non-magnetic stub shafts disposed on one end of a corresponding permanent magnet section of the pair of said sections;
a non-magnetic separator (12) disposed within the bore seal tube for axially spacing and locating the pair of permanent magnet sections;
the non-magnetic retaining hoop (6) surrounding and retaining the permanent magnet sections (2,4), the stub shafts (8,10) and the non-magnetic separator (12);
a pair of stator assemblies (16,18), each of which is disposed outside the bore seal tube (7) in operative relation with a corresponding magnet section of the pair of said sections;
a retainer (14) surrounding the pair of stator assemblies; and
said retainer (14) and said bore seal tube (7) cooperating to retain the pair of stator assemblies (16,18) in operative relation with the corresponding magnet sections (2,4) of said single rotor assembly, with said magnet sections and said corresponding stator assemblies being thereby retained in tandem to provide the redundant electric motor arrangement.

2. The arrangement as described by claim 1, wherein:
the non-magnetic retaining hoop (6) has sufficient interference with the pair of permanent magnet sections (2,4), the respective stub shafts (8,10) and the non-magnet separator (12) to insure that said sections, stub shafts and retainer are retained in compression over desired motor operating speed and temperature conditions.

3. The arrangement as described by claim 1, wherein each of the pair of stator assemblies includes:
six individually toroidally-wound sixty degree half-phase sectors (A,B,C; A',B',C').

4. The arrangement as described by claim 3, including:
insulator/separators (25) for separating adjacent phases of the six individually toroidally wound sixty degree half-phase sectors.

5. The arrangement as described by claim 4, wherein:
the insulator/separators (25) are keyed into the retainer (14) and the bore seal tube (7).

6. The arrangement as described by claim 1, including:
a motor housing (30);
a stator assembly retaining ring (32); and
means (34) for securing the stator retaining ring (32) and the retainer (14) to the motor housing.

7. The arrangement as described by claim 3, wherein:
each of the stator assemblies includes a flux collector ring (20) surrounded by insulation means (21) and the toroidal stator windings (24).

8. The arrangement as described by claim 1, including:
a barrier (22) for separating respective windings of the pair of stator assemblies (16,18).

## Patentansprüche

1. Redundante Elektromotoranordnung, die folgendes umfaßt:
ein Bohrungsdichtrohr (7);
eine einzelne Rotorbaugruppe mit einem Paar identischer koaxialer zylindrischer zweipoliger Permanentmagnetabschnitte (2, 4), die in dem Bohrungsdichtrohr angeordnet sind;
einen nichtmagnetischen Haltering (6), der innerhalb des Bohrungsdichtrohrs angeordnet ist;
ein Paar nichtmagnetischer Wellenstümpfe (8, 10), die innerhalb des Bohrungsdichtrohrs angeordnet sind und von dem nichtmagnetischen Haltering (6) gestützt werden, wobei jeder der nichtmagnetischen Wellenstümpfe an einem Ende eines entsprechenden Permanentmagnetabschnitts des Paares von Abschnitten angeordnet ist;
ein innerhalb des Bohrungsdichtrohrs angeordnetes nichtmagnetisches Abstandsstück (12) zum axialen Trennen und Positionieren des Paares der Permanentmagnetabschnitte;
wobei der nichtmagnetische Haltering (6) die Permanentmagnetabschnitte (2, 4), die Wellenstümpfe (8, 10) und das nichtmagnetische Abstandsstück (12) umgibt und arretiert;
ein Paar Statorbaugruppen (16, 18), die jeweils außerhalb des Bohrungsdichtrohrs (7) in Wirkbeziehung mit einem entsprechenden Magnetabschnitt des Paares der Abschnitte angeordnet sind;
eine Aufnahme (14), die das Paar Statorbaugruppen umgibt; und
wobei die Aufnahme (14) und das Bohrungsdichtrohr (7) zusammenwirken, um das Paar Statorbaugruppen (16, 18) in Wirkbeziehung mit den entsprechenden Magnetabschnitten (2, 4) der einzelnen Rotorbaugruppe zu halten, wobei auf diese Weise die Magnetabschnitte und die entsprechenden Statorbaugruppen zur Bereitstellung der redundanten Elektromotoranordnung in Tandemanordnung gehalten werden.

2. Anordnung nach Anspruch 1, bei der der nichtmagnetische Haltering (6) genügend Interferenz mit dem Paar Permanentmagnetabschnitte (2, 4), den jeweiligen Wellenstümpfen (8, 10) und dem nichtmagnetischen Abstandsstück (12) aufweist, um sicherzustellen, daß diese Abschnitte, Wellenstümpfe und Abstandsstück über die Bedingungen gewünschte Motorbetriebsdrehzahl und Temperatur unter Druck gehalten werden.

3. Anordnung nach Anspruch 1, bei der jede des Paares von Statorbaugruppen sechs einzeln ringförmig gewickelte Sechzig-Grad-Halbphasenabschnitte (A, B, C; A', B', C') enthält.

4. Anordnung nach Anspruch 3, mit Isolator/Abstandsstücken (25) zum Trennen benachbarter Phasen der sechs einzeln ringförmig gewickelten Sechzig-Grad-Halbphasenabschnitte.

5. Anordnung nach Anspruch 4, bei der die Isolator/Abstandsstücke (25) in die Aufnahme (14) und das Bohrungsdichtrohr (7) verzahnt sind.

6. Anordnung nach Anspruch 1, mit einem Motorgehäuse (30), einem Statorbaugruppenhaltering (32) und einem Mittel (34) zum Sichern des Statorhalterings (32) und der Aufnahme (14) am Motorgehäuse.

7. Anordnung nach Anspruch 3, bei der jede der Statorbaugruppen einen von einem Isoliermittel (21) und den ringförmigen Statorwicklungen (24) umgebenen Flußkollektorring (20) enthält.

8. Anordnung nach Anspruch 1, mit einer Trennwand (22) zum Trennen jeweiliger Wicklungen des Paares von Statorbaugruppen (16, 18).

## Revendications

1. Configuration redondante de moteur électrique, comprenant:
un tube d'étanchéité à alésage (7) ;
un rotor unique comportant une paire de sections aimantées permanentes bipolaires cylindriques coaxiales identiques (2, 4) disposées à l'intérieur du tube d'étanchéité à alésage;
une frette de retenue amagnétique (6) disposée à l'intérieur du tube d'étanchéité à alésage;
une paire d'arbres à bout amagnétiques (8, 10) disposés à l'intérieur du tube d'étanchéité à alésage et supportés par la frette de retenue amagnétique (6), chacun desdits arbres à bout amagnétiques étant disposé sur une extrémité d'une section aimantée permanente correspondante de la paire desdites sections;
un séparateur amagnétique (12) disposé à l'intérieur du tube d'étanchéité à alésage pour séparer et positionner axialement la paire de sections aimantées permanentes;
la frette de retenue amagnétique (16) entourant et retenant les sections aimantées permanentes (2, 4), les arbres à bout (8, 10) et le séparateur amagnétique (12);
une paire de stators (16, 18), dont chacun est disposé à l'extérieur du tube d'étanchéité à alésage (7) en relation fonctionnelle avec une section aimantée correspondante de la paire desdites sections;
un dispositif de retenue (14) entourant la paire de stators; et
ledit dispositif de retenue (14) et ledit tube d'étanchéité à alésage (7) coopérant pour retenir la paire de stators (16, 18) en relation fonctionnelle avec les sections aimantées (2, 4) correspondantes dudit rotor unique, lesdites sections aimantées et lesdits stators correspondants étant ainsi retenus en tandem pour fournir la configuration redondante de moteur électrique.

2. Configuration selon la revendication 1, dans laquelle:
la frette de retenue amagnétique (6) interfère de façon suffisante avec la paire de sections aimantées permanentes (2, 4), les arbres à bout (8, 10) respectifs et le séparateur amagnétique (12) pour faire en sorte que lesdites sections, arbres à bout et dispositif de retenue soient retenus en compression sur une plage de conditions de vitesse et de température de fonctionnement souhaitées du moteur.

3. Configuration selon la revendication 1, dans laquelle chacun parmi la paire de stators comporte:
six secteurs de demi-phase de soixante degrés à enroulement toroïdal individuel (A, B, C; A', B', C').

4. Configuration selon la revendication 3, comportant:
des isolants/séparateurs (25) pour séparer des phases adjacentes des six secteurs de demi-phase de soixante degrés à enroulement toroïdal individuel.

5. Configuration selon la revendication 4, dans laquelle:
les isolants/séparateurs (25) sont clavetés dans le dispositif de retenue (14) et le tube d'étanchéité à alésage (7).

6. Configuration selon la revendication 1, comportant:
un carter (30) de moteur;
un anneau de retenue (32) de stator; et
un moyen (34) pour fixer l'anneau de retenue (32) de stator et le dispositif de retenue (14) au carter du moteur.

7. Configuration selon la revendication 3, dans laquelle:
chacun des stators comporte un anneau collecteur de flux (20) entouré d'un moyen isolant (21) et des enroulements toroïdaux (24) des stators.

8. Configuration selon la revendication 1, comportant:
une barrière (22) pour séparer des enroulements respectifs de la paire de stators (16, 18).
